(19) Europäisches Patentamt
European Patent Office
Office européen des brevets

(11) **EP 4 622 354 A1**

(12) **EUROPEAN PATENT APPLICATION**
published in accordance with Art. 153(4) EPC

(43) Date of publication:
**24.09.2025 Bulletin 2025/39**

(21) Application number: **23912923.2**

(22) Date of filing: **27.12.2023**

(51) International Patent Classification (IPC):
*H04W 52/02* (2009.01)    *H04W 76/27* (2018.01)

(52) Cooperative Patent Classification (CPC):
**H04W 52/02; H04W 76/27;** Y02D 30/70

(86) International application number:
**PCT/KR2023/021697**

(87) International publication number:
**WO 2024/144249 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 KR 20220187861**

(71) Applicant: Samsung Electronics Co., Ltd.
**Suwon-si, Gyeonggi-do 16677 (KR)**

(72) Inventors:
• YANG, Hyewon
  **Suwon-si, Gyeonggi-do 16677 (KR)**
• CHOI, Seunghoon
  **Suwon-si, Gyeonggi-do 16677 (KR)**
• LEE, Jaewon
  **Suwon-si, Gyeonggi-do 16677 (KR)**
• YI, Junyung
  **Suwon-si, Gyeonggi-do 16677 (KR)**

(74) Representative: **HGF**
**HGF Limited**
**1 City Walk**
**Leeds LS11 9DX (GB)**

(54) **METHOD AND DEVICE FOR DECREASING POWER CONSUMPTION OF USER EQUIPMENT HAVING WAKEUP RECEIVER IN WIRELESS COMMUNICATION SYSTEM**

(57)    The present disclosure relates to a 5G or 6G communication system for supporting higher data transmission rates. In addition, the present disclosure presents a method and a device for transmitting/receiving a wake up signal (WUS) for a plurality of users, the method being performed by means of a base station and a user equipment in a wireless communication system.

FIG. 7

EP 4 622 354 A1

## Description

[Technical Field]

The disclosure relates to a wireless communication system and, in particular, to a method and a device for reducing power consumption of a terminal having a wakeup receiver.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to reduce power consumption of terminals.

[Disclosure]

[Technical Problem]

Based on the discussion as described above, the disclosure is to provide a method and a device for reducing power consumption of a terminal having a wakeup receiver.

[Technical Solution]

According to an embodiment of the disclosure for achieving the task, a method performed by a terminal in a wireless communication system may include monitoring a wake-up signal (WUS), receiving the WUS from a base station, change a state of a main radio receiver, based on the received WUS, and change a state of a wake-up receiver (WUR), based on the changed state of the main radio receiver.

In addition, a method performed by a base station in a wireless communication system may include transmitting a wake-up signal (WUS) to a terminal having a wake-up receiver (WUR), and receiving feedback information for the WUS from the terminal, wherein the WUS includes at least one of a WUS for identifying coverage and a WUS for changing a state of a main radio receiver of the terminal.

In addition, a method performed by a terminal of a wireless communication system includes identifying configuration information on a wake-up signal (WUS), detecting the WUS through a wake-up receiver (WUR), based on the configuration information, triggering a main radio to be turned on in response to detection of the WUS, and receiving a signal from a base station through the main radio, wherein the WUS is configured by one or more signals, and the one or more signals are transmitted on different frequency-time resources, respectively.

In addition, a method performed by a base station of a wireless communication system includes identifying configuration information on a wake-up signal (WUS), transmitting the WUS according to the configuration information to a terminal, and transmitting a signal to the terminal, wherein the WUS is configured by one or more signals, and the one or more signals are transmitted on different frequency-time resources, respectively.

In addition, a terminal of a wireless communication system includes a main radio including a transceiver, a wake-up receiver (WUR) configured to detect a wake-up signal (WUS), and a controller configured to control the main radio and a WUS, wherein the controller is configured to configure the WUR and the main radio to identify configuration information on a wake-up signal (WUS), allow the WUR to detect the WUS, based on the configuration information, trigger the main radio to be turned on in response to detection of the WUS, and receive a signal from a base station through the main radio, and wherein the WUS is configured by one or more signals, and the one or more signals are transmitted on different frequency-time resources, respectively.

In addition, a base station of a wireless communication system includes a transceiver, and a controller, wherein the controller is configured to identify configuration information on a wake-up signal (WUS), transmit the WUS according to the configuration information to a terminal, and transmit a signal to the terminal, and wherein the WUS is configured by one or more signals, and the one or more signals are transmitted on different frequency-time resources, respectively.

[Advantageous Effects]

The disclosure provides a method and a device capable of effectively providing services in a wireless communication system. In particular, the disclosure provides a method and a device that reduce power consumption of a terminal by using a WUS and a WUR.

[Description of Drawings]

FIG. 1 illustrates an example of a basic structure of a time-frequency domain in a 5G communication system.
FIG. 2 illustrates an example of a beam sweeping operation and a time domain mapping structure of a synchronization signal
FIG. 3 illustrates an example of a random access procedure.
FIG. 4 illustrates an example of a procedure in which a UE reports UE capability information to a base station.

FIG. 5 illustrates an example of an operation in which a base station indicates, through a WUS, switching of a main radio state of a UE having a WUR.

FIG. 6 is a diagram illustrating an example of a method of, when the number of wake-up ID candidates distinguishable by a single WUS is limited, designing an MU-WUS such that multiple terminals or terminal groups are distinguishable through a WUS;

FIG. 7 is a diagram illustrating an example of a method in which a terminal determines whether to wake up a main radio by monitoring different MU-WUSs;

FIG. 8 is a diagram illustrating an example of an operation of a base station when a terminal (group) is distinguished and a wake-up is indicated, based on a wake-up (group) ID;

FIG. 9 is a diagram illustrating an example of an operation of a terminal when the terminal (group) is distinguished and a wake-up is indicated, based on a wake-up (group) ID;

FIG. 10 is a block diagram illustrating a structure of a UE according to an embodiment of the disclosure.

FIG. 11 is a block diagram illustrating the structure of a base station according to an embodiment of the disclosure.

[Mode for Invention]

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description, terms and names defined in the 3GPP new radio standards (3GPP NR: 5th generation mobile communication standards) are used for the sake of descriptive convenience. However, the disclosure is not limited by these terms and names, and may be applied in the same way to systems that conform other standards. In addition, the term "terminal" may refer to not only cellular phones, smartphones, IoT devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, the examples given above are not limiting.

Hereinafter, the term "A/B" may be understood as A or/and B.

In order to process mobile data traffic which has recently increased exponentially, initial standards of new radio (NR) access technology or 5th generation (5G) systems which are next-generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems mainly aim to provide ultrahigh-speed data services up to multiple Gbps by using ultrawide bandwidths far wider than the same. Accordingly, 5G systems consider ultrahigh-frequency bands ranging from multiple GHz to a maximum of 100 GHz, in which it is relatively easy to secure ultrawide -bandwidth frequencies, as candidate frequencies. Additionally, it is possible to secure broad-bandwidth frequencies for 5G systems through frequency rearrangement or allocation among frequency bands ranging from hundreds of MHz to multiple GHz used in legacy mobile communication systems.

Radio waves in ultrahigh frequency bands have millimeter-level wavelengths and thus are also referred to as millimeter waves (mmWave). However, the pathloss of radio waves in ultrahigh frequency bands increases in proportion to the frequency band, thereby reducing the coverage of the mobile communication systems.

In order to overcome the shortcoming of coverage reduction in ultrahigh frequency bands, a beamforming technology is applied such that the distance reached by radio waves is increased by concentrating the energy radiated by the radio waves at a specific target point by using multiple antennas. That is, signals to which the beamforming technology is applied have a smaller beam width, and radiated energy is concentrated within the smaller beam width, thereby increasing the distance reached by radio waves. The beamforming technology may be applied to each of the transmission and reception ends. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a base station. In addition, the beamforming technology may also be applied to a control channel and a data channel for transmitting a common signal transmitted from a gNB to multiple UEs in the system, such as a synchronization signal, a physical broadcast channel (PBCH), and system information, in order to increase the coverage. When the beamforming technology is applied to a common signal, a beam sweeping technology is additionally applied such that the signal is transmitted after changing the beam direction, thereby ensuring that the common signal can reach a UE existing at a specific location inside the cell.

As another requirement of 5G systems, an ultra-low latency service is required such that the transmission delay between the transmission and reception ends is about 1ms or less. In an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A.

According to an embodiment of the disclosure, a method for signal transmission by a UE having a wakeup receiver in a mobile communication system may be defined, thereby solving the problem of excessive power consumption by the UE and accomplishing a high level of energy efficiency.

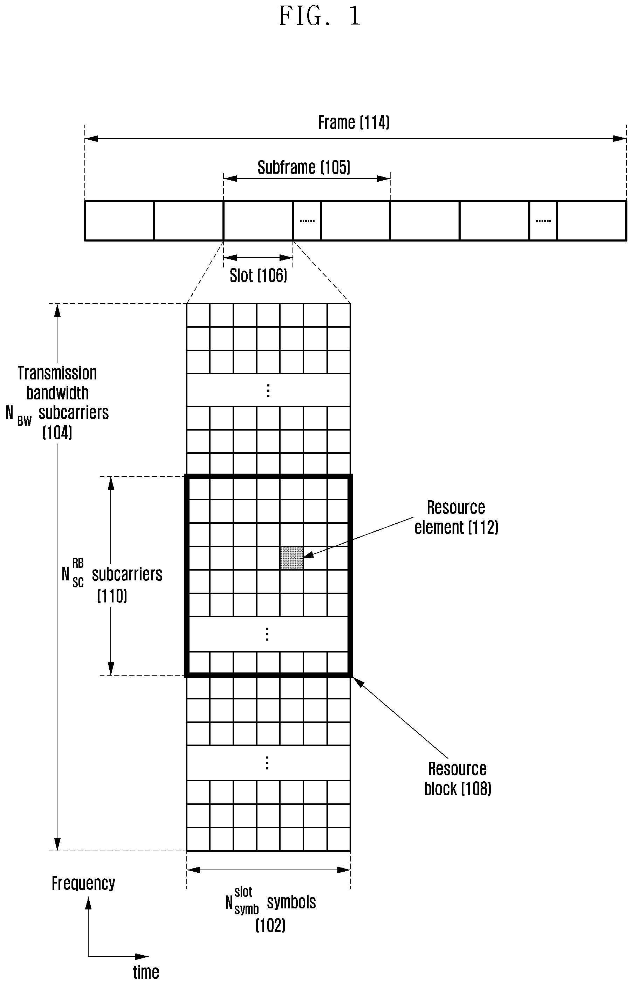

FIG. 1 illustrates an example of a basic structure of a time-frequency resource domain in a 5G communication system. That is, FIG. 1 illustrates the basic structure of a time-frequency resource domain which is a radio resource domain used to transmit data or control channels of a 5G system.

Referring to FIG. 1, the horizontal axis in FIG. 1 denotes the time domain, and the vertical axis denotes the frequency domain. The minimum transmission unit in the time domain of the 5G system is an orthogonal frequency division multiplexing (OFDM) symbol, a group of $N_{symb}^{slot}$ symbols 102 may constitute one slot 106, and a group of $N_{slot}^{subframe}$ slots may constitute one subframe 105. The length of one subframe 105 may be 1.0ms, and a group of ten subframes may constitute a 10ms frame 114. The minimum transmission unit in the frequency domain is a subcarrier, and a total of $N_{BW}$ subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by $N_{sc}^{RB}$ consecutive subcarriers 110 in the frequency domain. In 5G systems, $N_{sc}^{RB} = 12$, and the data rate may increase in proportion to the number of RBs scheduled for the UE.

In 5G systema, a base station may map data in units of RBs, and may generally schedule RBs constituting one slot with regard to a specific UE. That is, the basic time unit to perform scheduling in 5G systems may be a slot, and the basic frequency unit to perform scheduling may be an RB.

The number of OFDM symbols, $N_{symb}^{slot}$, is determined according to the length of a cyclic prefix (CP) which is added to each symbol in order to prevent inter-symbol interference. For example, if a normal CP is applied, $N_{symb}^{slot} = 14$ and, if an extended CP is applied, $N_{symb}^{slot} = 12$. The extended CP is applied to a system having a longer radio-wave transmission distance than the normal CP, thereby maintaining inter-symbol orthogonality. In the case of the normal CP, the ratio between the CP length and the symbol length may be maintained at a constant value such that the overhead due to the CP remains constant regardless of the subcarrier spacing. That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in 5G systems, various frame structures may be supported by adjusting the subcarrier spacing. For example,

In terms of the operating frequency band, the larger the subcarrier spacing, the more advantageous for restoration of phase noise in high-frequency bands.

In terms of the transmission time, the larger the subcarrier spacing, the smaller the symbol length in the time domain, and thus the resulting smaller slot length makes it more advantageous to support an ultra-low-latency service such as URLLC.

In terms of the cell size, the larger the CP length, the larger cell can be supported, meaning that the smaller the subcarrier spacing, the larger cell can be supported. The term "cell" is a concept referring to a region covered by one base station in connection with mobile communication.

The subcarrier spacing, the CP length, and the like are mandatory information for OFDM transmission/reception, and efficient transmission/reception is possible only if the base station and the UE recognize the subcarrier spacing, the CP length, and the like as mutually common values. Table 1 enumerates the relationship between the subcarrier spacing configuration ($\mu$), the subcarrier spacing($\Delta f$), and the CP length supported in a 5G system.

[Table 1]

| $\mu$ | $\Delta f = 2^{\mu} \cdot 15$ [kHz] | Cyclic prefix |
|---|---|---|
| 0 | 15 | Normal |

(continued)

| μ | Δf = 2$^μ$·15 [kHz] | Cyclic prefix |
|---|---|---|
| 1 | 30 | Normal |
| 2 | 60 | Normal, Extended |
| 3 | 120 | Normal |
| 4 | 240 | Normal |

Table 2 enumerates the number ( $N_{symb}^{slot}$ ) of symbols per one slot, the number( $N_{slot}^{frame,\mu}$ ) of slots per one frame, and the number ( $N_{slot}^{subframe,\mu}$ ) of slots per one subframe with regard to each subcarrier spacing configuration (μ) in the case of a normal CP.

[Table 2]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 enumerates the number ( $N_{symb}^{slot}$ ) of symbols per one slot, the number( $N_{slot}^{frame,\mu}$ ) of slots per one frame, and the number ( $N_{slot}^{subframe,\mu}$ ) of slots per one subframe with regard to each subcarrier spacing configuration (μ) in the case of an extended CP.

[Table 3]

| μ | $N_{symb}^{slot}$ | $N_{slot}^{frame,\mu}$ | $N_{slot}^{subframe,\mu}$ |
|---|---|---|---|
| 2 | 12 | 40 | 4 |

It is expected that 5G systems, in the early state of introduction, will at least coexist with legacy LTE and/or LTE-A systems or operate in a dual mode. Accordingly, legacy LTE/LTE-A may provide stable system operations to UEs, and 5G systems may play the role of providing improved services to UEs. Therefore, the frame structure of 5G systems needs to include at least the frame structure of LTE/LTE-A or an essential parameter set (subcarrier spacing = 15kHz).

For example, a comparison between a frame structure having a subcarrier spacing configuration μ=0 (hereinafter, referred to as frame structure A) and a frame structure having a subcarrier spacing configuration μ=1 (hereinafter, referred to as frame structure B) shows that, compared with frame structure A, frame structure B has double the subcarrier spacing and the RB size, and has half the slot length and the symbol length. In the case of frame structure B, two slots may constitute one subframe, and 20 subframes may constitute one frame.

To generalize the framed structure of 5G systems, the subcarrier spacing, the CP length, the slot length, and the like (essential parameter set) are integer multiples with each other with regard to each frame structure, thereby providing a high degree of extendibility. In addition, a subframe having a fixed length of 1ms may be defined to represent a reference time unit unrelated to the frame structure.

The frame structure may be applied according to various scenarios. From the viewpoint of the cell size, the larger the CP length, the larger cells can be supported, meaning that frame structure A may support larger cells than frame structure B. In terms of the operating frequency band, the larger the subcarrier spacing, the more advantageous to high-frequency-band phase noise restoration, meaning that frame structure B may support a higher operating frequency than frame structure A. In terms of services, the smaller the slot length (basic time unit of scheduling), the more advantageous to supporting an ultra-low-latency service such as URLLC, meaning that frame structure B may be more appropriate for an URLLC service than frame structure A.

As used in the following description of the disclosure, the uplink may refer to a radio link via which a UE transmits data or control signals to a base station, and the downlink may refer to a radio link via which the base station transmits data or control signals to the UE.

In an initial access step in which a UE initially accesses a system, the UE may perform downlink time and frequency domain synchronization and acquire a cell identity (ID) from asynchronization signal, transmitted by a base station, through a cell search. In addition, the UE may receive a PBCH by using the acquired cell ID and acquire a master information block (MIB) as mandatory system information from the PBCH. Additionally, the UE may receive system information (system information block (SIB)) transmitted by the base station to acquire cell-common transmission and reception-related control information. The cell-common transmission and reception-related control information may include random access-related control information, paging-related control information, common control information for various physical channels, etc.

Asynchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied differently depending on a service type.

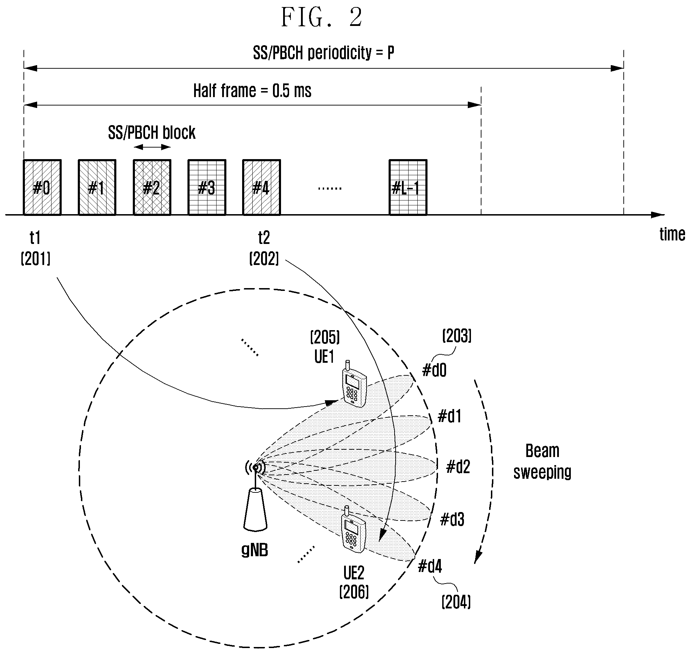

FIG. 2 illustrates an example of a beam sweeping operation and a time domain mapping structure of a synchronization signal

For description purposes, the following elements may be defined. Obviously, the examples given below are not limiting.

Primary synchronization signal (PSS): A PSS is a signal that serves as a reference for DL time/frequency synchronization, and provides a part of cell ID information.

Secondary synchronization signal (SSS): An SSS serves as a reference for DL time/frequency synchronization, and provides the other part of the cell ID information. Additionally, the SSS may serve as a reference signal for demodulation of a PBCH.

PBCH: provides an MIB which is mandatory system information necessary for the UE to transmit/receive data channels and control channels. The mandatory system information may include search space-related control information indicating radio resource mapping information of a control channel, scheduling control information for a separate data channel for transmission of system information, a system frame number (SFN) which is a frame unit index that serves as a timing reference, and other information.

Synchronization signal/PBCH block (SS/PBCH block) or SSB: An SS/PBCH block is configured by N OFDM symbols and may include a combination of a PSS, an SSS, a PBCH, etc. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periods P. The base station may inform a UE of period P via signaling. If there is no separate signaling of period P, the UE may apply a previously agreed default value.

Referring to FIG. 2, FIG. 2 illustrates an example in which beam sweeping is applied in units of SS/PBCH blocks over time. In the example of FIG. 2, UE 1 205 may receive an SS/PBCH block by means of a beam emitted in direction #d0 203 by beamforming applied to SS/PBCH block #0 at time point t1 201. In addition, UE 2 206 receives an SS/PBCH block by means of a beam emitted in direction #d4 202 by beamforming applied to SS/PBCH block #4 at time point t2 204. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an S S/PBCH block of the adjacent cell in order to determine the radio link quality of the adjacent cell and acquire time/frequency synchronization with the adjacent cell.

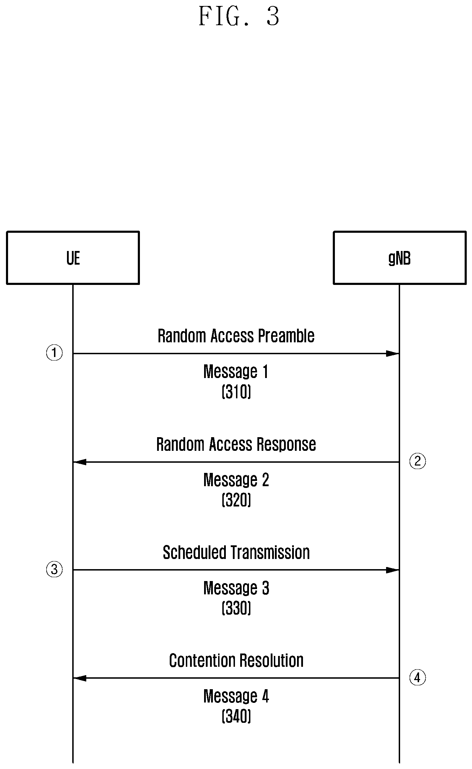

After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates an example of a random access procedure according to an embodiment of the disclosure.

Referring to FIG. 3, in the first step 310 of the random access procedure, the UE may transmit a random access preamble to the gNB. The random access preamble, which is a message initially transmitted by the UE in the random access procedure, may be referred to as message 1. The gNB may measure the transmission delay value between the UE and the gNB from the random access preamble, and may conduct uplink synchronization. The UE may arbitrarily select which random access preamble is to be used, from a random access preamble set given by system information in advance. In addition, the initial transmission power of the random access preamble may be determined according to the pathloss between the gNB and the UE, which is measured by the UE. Furthermore, the UE may determine the transmission beam direction of the random access preamble from a synchronization signal received from the gNB, thereby transmitting the random access preamble.

In the second step 320, the gNB transmits an uplink transmission timing adjustment command to the UE, based on the transmission delay value measured from the random access preamble received in the first step 310. The gNB may also transmit a command to control power and uplink resources to be used by the UE, as scheduling information. The scheduling information may include control information regarding the UE's uplink transmission beam.

If the UE fails to receive a random access response (RAR) (or message 2) which is scheduling information regarding message 3 from the gNB within a predetermined time in the second step 320, the UE may perform the first step 310 again. If performing the first step 310 again, the UE may transmit the random access preamble after increasing the transmission power thereof by a predetermined step (power ramping), thereby increasing the probability that the gNB will receive the random access preamble.

In the third step 330, the UE transmits uplink data (message 3) including the UE's ID to the gNB through a physical uplink shared channel (PUSCH) by using uplink resources assigned in the second step 320. The transmission timing of the PUSCH for transmitting message 3 may follow a timing control command received from the gNB in the second step 320. In addition, the transmission power of the PUSCH for transmitting message 3 may be determined in consideration of a power control command received from the gNB in the second step 320 and the power ramping value of the random access preamble. The PUSCH for transmitting message 3 may refer to an uplink data signal initially transmitted to the gNB by the UE after the UE has transmitted a random access preamble.

In the fourth step 340, upon determining that the UE has performed a random access without contention with other UEs, the gNB transmits data (message 4) including the ID of the UE which transmitted uplink data in the third step 330 to the corresponding UE. Upon receiving a signal transmitted by the gNB in the fourth step 340, the UE may determine that the random access is successful. In addition, the UE may transmit HARQ-ACK information to the gNB through a physical uplink control channel (PUCCH) so as to indicate whether message 4 is successfully received or not.

If the gNB fails to receive a data signal from the UE due to collision between data transmitted by the UE in the third step 330 and data from another UE, the gNB may no longer transmit data to the UE. If the UE thus fails to receive data transmitted from the gNB in the fourth step 340 within a predetermined time, the UE may determine that the random access procedure has failed and may restart from the first step 310.

Upon successfully completing the random access procedure, the UE is switched to a connected state (RRC_CONNECTED state), and one-to-one communication between the gNB and the UE becomes possible. The gNB may receive UE capability information reported by the UE in a connected state and may adjust scheduling with reference to the UE capability information from the UE. The UE may inform the gNB of whether the UE itself supports a specific function or not, the maximum allowed value of the function supported by the UE, and the like through the UE capability information. Therefore, UE capability information reported to the gNB by each UE may have a different value with regard to each UE.

As an example of the UE capability information, the UE may report UE capability information including at least a part of the following control information to the gNB. Obviously, the examples given below are not limiting.

Control information regarding the frequency band supported by the UE
Control information regarding the channel bandwidth supported by the UE
Control information regarding the maximum modulation scheme supported by the UE
Control information regarding the maximum number of beams supported by the UE
Control information regarding the maximum number of layers supported by the UE
Control information regarding the channel state information reporting supported by the UE
Control information regarding whether the UE supports frequency hopping
Control information regarding the bandwidth when carrier aggregation (CA) is supported
Control information regarding whether cross-carrier scheduling is supported when CA is supported

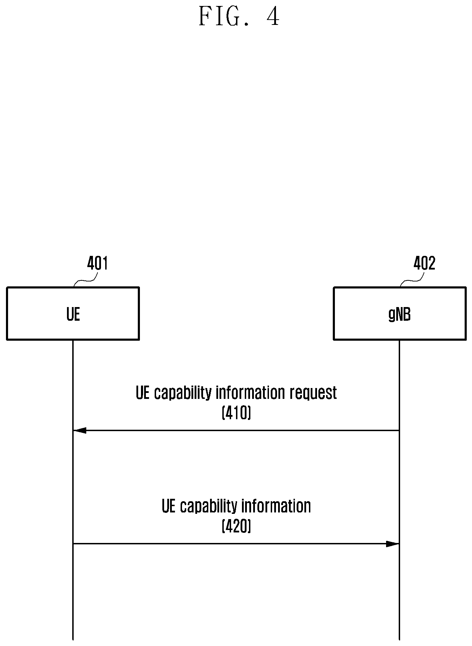

FIG. 4 illustrates an example of a procedure in which a UE reports UE capability information to a gNB.

Referring to FIG. 4, in step 410, the gNB 402 may transmit a UE capability information request message to the UE 401. The UE transmits UE capability information to the gNB in step 420 at the request for UE capability information of the gNB.

Through the above-described process, the UE connected to the gNB may conduct one-to-one communication as a UE in an RRC_CONNECTED state. To the contrary, the UE having no connection may be a UE in an RRC_IDLE state, and operations of the UE in the RRC_IDLE state may be distinguished as follows. Obviously, the examples given below are not limiting.

A UE-specific discontinuous reception (DRX) cycle operation configured by the upper layer
An operation of receiving a paging message from the core network
Acquiring system information
A neighboring cell-related measurement operation and cell reselection

In 5G systems, a new UE state (RRC_INACTIVE) has been defined to reduce the energy and time consumed for the UE's initial access. The RRC_INACTIVE UE may perform the following operations in addition to operations performed by an RRC_IDLE UE. Obviously, the examples given below are not limiting.

Storing access stratum (AS) information necessary for cell access
A UE-specific DRX cycle operation configured by the RRC layer
Configuring a RAN-based notification area (RNA) which may be utilized during a handover by the RRC layer, and periodically performing update
Monitoring a RAN-based paging message transmitted through an inactive-radio network temporary identifier (I-RNTI)

Hereinafter, a scheduling method in which the gNB transmits downlink data to the UE, or instructs the UE to transmit uplink data, will be described.

Downlink control information (DCI) refers to control information transmitted to from the gNB to a UE through the downlink, and may include downlink data scheduling information or uplink data scheduling information regarding a specific UE. In general, the gNB may independently channel-code DCI with regard to each UE and may transmit the same to each UE through a physical downlink control channel (PDCCH).

With regard to a UE to be scheduled, the gNB may apply and operate a predetermined DCI format according to the purpose, such as whether the same is scheduling information regarding downlink data (downlink assignment), whether the same is scheduling information regarding uplink data (uplink grant), or whether the same is DCI for power control.

The gNB may transmit downlink data to the UE through a physical downlink shared channel (PDSCH). Scheduling information such as the specific mapping location of the PDSCH in the time and frequency domains, the modulation scheme, HARQ-related control information, and power control information may be provided from the gNB to the UE through DCI related to downlink data scheduling information among DCI transmitted through a PDCCH.

The UE may transmit uplink data to the gNB through a PUSCH. Scheduling information such as the specific mapping location of the PUSCH in the time and frequency domains, the modulation scheme, HARQ-related control information, and power control information may be provided from the gNB to the UE through DCI related to uplink data scheduling information among DCI transmitted through a PDCCH.

The time-frequency resource to which the PDCCH is mapped is referred to as a control resource set (CORESET). The CORESET may be configured in all or part of frequency resources in a bandwidth supported by the UE in the frequency domain. One or multiple OFDM symbols may be configured as the CORESET in the time domain, and this may be defined as a control resource set (CORESET) duration. The gNB may configure one or multiple CORESETs for the UE through upper layer signaling (for example, system information, MIB, or RRC signaling). The description that a CORESET is configured for the UE may mean that information such as the CORESET identity, the CORESET's frequency location, and the CORESET's symbol length is provided thereto. Pieces of information provided to the UE by the gNB in order to configure a CORESET may include at least some of the pieces of information included in [Table 4].

【Table 4】

```
ControlResourceSet ::=              SEQUENCE {

    controlResourceSetId            ControlResourceSetId,
    (CORESET identity)

     frequencyDomainResources       BIT STRING (SIZE (45)),
    (frequency domain resources)

    duration                        INTEGER (1..maxCoReSetDuration),
    (CORESET duration)

     cce-REG-MappingType            CHOICE {
    (CCE-to-REG mapping type)

         interleaved                SEQUENCE {
```

```
        reg-BundleSize          ENUMERATED {n2, n3, n6},
        (REG bundle size)
        interleaverSize         ENUMERATED {n2, n3, n6},
        (interleaver size)
        shiftIndex                 INTEGER(0..maxNrofPhysicalResourceBlocks-1)
OPTIONAL -- Need S
        (interleaver shift)
        },
        nonInterleaved              NULL
    },
    precoderGranularity              ENUMERATED  {sameAsREG-bundle,
allContiguousRBs},
    (precoding unit)
    tci-StatesPDCCH-ToAddList            SEQUENCE(SIZE   (1..maxNrofTCI-
StatesPDCCH)) OF TCI-StateId OPTIONAL, -- Cond NotSIB1-initialBWP
    (QCL configuration information)
    tci-StatesPDCCH-ToReleaseList        SEQUENCE(SIZE      (1..maxNrofTCI-
StatesPDCCH)) OF TCI-StateId OPTIONAL, -- Cond NotSIB1-initialBWP
    (QCL configuration information)
    tci-PresentInDCI  ENUMERATED {enabled}          OPTIONAL, -- Need S
    (DCI 내 QCL indicator configuration information)
    pdcch-DMRS-ScramblingID    INTEGER (0..65535)       OPTIONAL, -- Need S
    (PDCCH DMRS scrambling identity)
}
```

A CORESET may be configured by $N_{RB}^{CORESET}$ RBs in the frequency domain and $N_{RB}^{CORESET} \in \{1,2,3\}$ symbols in the time domain. An NR PDCCH may be configured by one or multiple control channel elements (CCEs). One CCE may be configured by six resource element groups (REGs), and each REG may be defined as one RB during one OFDM symbol. In one CORESET, REGs may be indexed in the time-first order, starting from REG index 0 in the CORESET's first CORESET symbol/lowest RB.

As a PDCCH-related transmission method, an interleaved type and a non-interleaved type may be supported. The gNB may configure, for the UE, whether interleaved or non-interleaved transmission is performed with regard to each CORESET through upper layer signaling. Interleaving may be performed at the REG bundle level. The REG bundle may be defined as one REG or a set of multiple REGs. Based on the gNB's configuration regarding whether interleaved or non-interleaved transmission is performed, the UE may determine a CCE-to-REG mapping type in the corresponding CORESET as in Table 5 below.

[Table 5]

| |
|---|
| The CCE-to-REG mapping for a control-resource set can be interleaved or non-interleaved and is described by REG bundles: |

(continued)

- REG bundle - is defined as REGs [$iL\_iL$-1....$iL$-$L$-1] where $L$ is the REG bundle size,

$i = 0,1,\ldots, N_{REG}^{CORESET}/L - 1$ , and $N_{REG}^{CORESET} = N_{RB}^{CORESET} N_{symb}^{CORESET}$ is the number of REGs in the CORESET

- CCE consists of REG bundles {$f(6j/L)f(6j/L$-1).....$f(6j/L$ - $6/L$ - 1)} where $f(\cdot)$ is an interleaver

For non-interleaved CCE-to-REG mapping, $L$ = 6 and $f(x)$ = $x$.

For interleaved CCE-to-REG mapping, $L \in$ {2,6}for $N_{symb}^{CORESET} = 1$ and $L \in \{N_{symb}^{CORESET}, 6\}$ for

$N_{symb}^{CORESET} \in \{2,3\}$ . The interleaver is defined by

$$f(x) = (rC + c + n_{shift}) \bmod (N_{REG}^{CORESET}/L)$$

$$x = cR + r$$
$$r = 0,1, \ldots, R - 1$$
$$c = 0,1, \ldots, C - 1$$
$$C = N_{REG}^{CORESET}/(LR)$$

where $R \in$ {2.3.6}.

The gNB may provide the UE with configuration information regarding to which symbol the PDCCH is mapped in the slot, the transmission period, and the like through signaling.

The number of CCEsnecessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured ALs.

The search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity of the UE.

Configuration information of the search space for the PDCCH may be configured for the UE by the base station through upper layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type(common search space or UE-specific search space), a combination of an RNTI and a DCI format to be monitored in the corresponding search space, a CORESET index for monitoring the search space, and the like. For example, parameters of the search space for the PDCCH may include the following pieces of information given in Table 6 below.

[Table 6]

| |
|---|
| SearchSpace ::=                                    SEQUENCE {<br><br>    searchSpaceId                            SearchSpaceId,<br><br>    (search space identity)<br><br>    controlResourceSetId                                            ControlResourceSetId<br><br>OPTIONAL,      -- Cond SetupOnly<br><br>    (CORESET identity)<br><br>    monitoringSlotPeriodicityAndOffset CHOICE {<br><br>    (monitoring slot level periodicity and offset) |

```
        sl1                       NULL,

        sl2                       INTEGER (0..1),

        sl4                       INTEGER (0..3),

        sl5                       INTEGER (0..4),

        sl8                       INTEGER (0..7),

        sl10                      INTEGER (0..9),

        sl16                      INTEGER (0..15),

        sl20                      INTEGER (0..19),

        sl40                      INTEGER (0..39),

        sl80                      INTEGER (0..79),

        sl160                     INTEGER (0..159),

        sl320                     INTEGER (0..319),

        sl640                     INTEGER (0..639),

        sl1280                    INTEGER (0..1279),

        sl2560                    INTEGER (0..2559)

    }

OPTIONAL,    -- Cond Setup

    duration          INTEGER (2..2559)          OPTIONAL,    -- Need R
    (monitoring duration)

monitoringSymbolsWithinSlot    BIT STRING (SIZE (14)) OPTIONAL, -- Cond Setup
    (monitoring symbol location within slot)

    nrofCandidates                     SEQUENCE {
    (number of PDCCH candidates according to aggregation levels)

        aggregationLevel1          ENUMERATED {n0, n1, n2, n3, n4, n5, n6, n8},

        aggregationLevel2          ENUMERATED {n0, n1, n2, n3, n4, n5, n6, n8},

        aggregationLevel4          ENUMERATED {n0, n1, n2, n3, n4, n5, n6, n8},

        aggregationLevel8          ENUMERATED {n0, n1, n2, n3, n4, n5, n6, n8},

        aggregationLevel16         ENUMERATED {n0, n1, n2, n3, n4, n5, n6, n8}

    }

OPTIONAL,    -- Cond Setup

    searchSpaceType                    CHOICE {
    (search space type)

        common                         SEQUENCE {
```

```
                     (common search space)
                    dci-Format0-0-AndFormat1-0              SEQUENCE {

                                    ...

                         }
OPTIONAL,      -- Need R
     dci-Format2-0                              SEQUENCE {
     nrofCandidates-SFI                         SEQUENCE {
     aggregationLevel1      ENUMERATED {n1, n2}   OPTIONAL,      -- Need R
     aggregationLevel2      ENUMERATED {n1, n2}    OPTIONAL,     -- Need R
     aggregationLevel4      ENUMERATED {n1, n2}      OPTIONAL,    -- Need R
     aggregationLevel8      ENUMERATED {n1, n2}      OPTIONAL,    -- Need R
     aggregationLevel16     ENUMERATED {n1, n2}       OPTIONAL      -- Need R
                         },

                                    ...

                         }
OPTIONAL,      -- Need R
                    dci-Format2-1                           SEQUENCE {

                                    ...

                         }
OPTIONAL,      -- Need R
                    dci-Format2-2                           SEQUENCE {

                                    ...

                         }
OPTIONAL,      -- Need R
                    dci-Format2-3                           SEQUENCE {
                    dummy1        ENUMERATED  {sl1,  sl2,  sl4,  sl5,  sl8,  sl10,  sl16,  sl20}
OPTIONAL,       -- Cond Setup
                    dummy2                 ENUMERATED {n1, n2},

                                    ...

                         }
OPTIONAL        -- Need R
                    },
                    ue-Specific                             SEQUENCE {
```

```
        (UE-specific search space)

        dci-Formats        ENUMERATED {formats0-0-And-1-0, formats0-1-And-1-1},

            ...,


            }

        }

OPTIONAL        -- Cond Setup2

}
```

According to configuration information, the base station may configure one or multiple search space sets for the UE. According to an embodiment of the disclosure, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

In a common search space, the UE may monitor combinations of DCI formats and RNTIs given below. Obviously, the examples given below are not limiting.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

In a UE-specific search space, the UE may monitor combinations of DCI formats and RNTIs given below. Obviously, the example givens below are not limiting.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI

The RNTIs enumerated above may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI(INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 7 below.

[Table 7]

| DCI format | Usage |
| --- | --- |
| 0_0 | Scheduling of PUSCH in one cell |

(continued)

| DCI format | Usage |
|---|---|
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In a 5G system, the search space at aggregation level L in connection with CORESET p and search space set s may be expressed by Equation 1 below.

[Equation 1]

$$\cdot\left\{\left(Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI}\right) mod \left\lfloor \frac{N_{CCE,p}}{L} \right\rfloor\right\} + i$$

L: aggregation level

$n_{CI}$: carrier index

$N_{CCE,p}$: total number of CCEs existing in control resource set p

$n_{s,f}^{\mu}$ : slot index

$M_{s,max}^{(L)}$ : number of PDCCH candidates at aggregation level L

$m_{s,n_{CI}} = 0, ..., M_{s,max}^{(L)} -1$ : PDCCH candidate index at aggregation level L

i = 0, ..., L -1

$Y_{p,n_{s,f}^{\mu}} = \left(A_p \cdot Y_{p,n_{s,f}^{\mu}-1}\right) mod\ D$ , $Y_{p,-1} = n_{RNTI} \neq 0$, $A_p = 39827$ for pmod3 = 0, $A_p = 39829$ for pmod3 = 1, $A_p$ = 39839 for pmod3 = 2, D = 65537

$n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

As described above, signal transmission/reception in ultrawide bandwidths ranging from tens or hundreds of MHz or multiple GHz may be supported to accomplish an ultrahigh-speed data service at multiple Gbps in 5G systems. Signal transmission/reception in ultrawide bandwidths may be supported through a single component carrier (CC) or through a carrier aggregation (CA) technology in which multiple CCs are combined. If a mobile communication operator fails to secure a bandwidth of frequencies sufficient to provide an ultrahigh-speed data service by using a single CC, the CA technology may combine respective CCs having relatively small bandwidth sizes such that the total sum of frequency bandwidths increases, thereby enabling an ultrahigh-speed data service.

5G systems are designed and developed in consideration of all of various use cases. Besides the standby time, reliability, and availability, the UE's energy efficiency is critical in 5G systems. 5G UEs need to be charged on a weekly or daily basis according to the individuals' time of use. In general, 5G UEs consume tens of mW in RRC_IDLE/RRC_INACTIVE states, and consume hundreds of mW in RRC_CONNECTED states. Design for extending the battery life is an indispensable element not only for better user experiences, but also for improved energy efficiency. Energy efficiency is more important to UEs having no continuous energy supply, for example, UEs using small rechargeable and single coin cell batteries. Among 5G use cases, sensors and actuators are arranged for monitoring, measurement, charging, and the like on a wide scale. In general, batteries for sensors or actuators cannot be recharged, and are expected to last at least a number of years. In addition, wearable devices such as smartwatches, rings, eHealth-related devices, and medical monitoring devices can hardly last a maximum of 1-2 weeks, depending on the time of use.

As one of the methods to reduce power consumption in 5G UEs, the UE may operate in a DRX mode. A UE to which DRX is applied may be periodically activated only at specific times to transmit and receive information. In this case, the reduction in power consumption of the UE depends on the length of an interval for which the UE is activated, such as a paging cycle. To satisfy battery life requirements, it is expected that a long extended discontinuous reception (eDRX) cycle will be used.

However, a method of using an eDRX cycle provides a long standby time to maintain a long battery life and thus may not be suitable for services requiring short standby time. For example, in fire detection and suppression cases, fire shutters needs to be closed and actuators are required to activate sprinklers within 1 to 2 seconds after the fire is detected by sensors. That is, in such standby time-critical use cases, conventional long eDRX cycles fail to meet delay requirements and thus may not be appropriate.

5G UEs are required to periodically wake up once per DRX cycle to identify whether there is data to be received. This may cause unnecessary power consumption during periods with no signaling or traffic. To solve this problem, if the UE is able to wake up only when the activation of the UE is required, such as when there is data including paging information required to be received by the UE, power consumption may be significantly reduced. This may be achieved by a method of monitoring a WUS by using a wake-up receiver (WUR) capable of monitoring a wake-up signal (WUS) with ultra-low power and, only when data transmission or reception is required, turning on (or triggering) a main radio (which may be understood as an existing NR radio device or a signal transmission/reception device capable of data communication by using cellular communication).

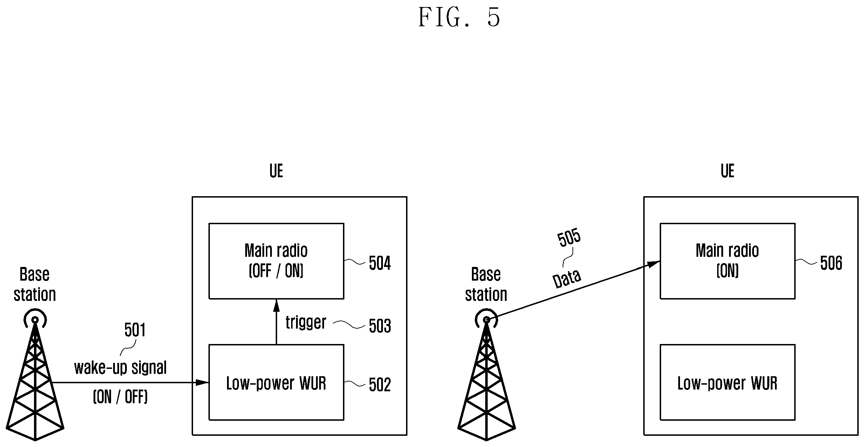

FIG. 5 is a diagram illustrating an example of an operation in which a base station indicates, through a WUS, switching of a main radio state of a UE having a WUR.

Referring to FIG. 5, when a base station transmits a WUS 501 corresponding to ON or OFF to a UE, the UE may receive the WUS 501 by using a WUR 502. The WUR may be a low-power WUR. According to whether the received signal indicates ON or OFF information, the UE may trigger (503) a main radio 504 in an OFF or ON state to configure same to be woken up or be turned off. In some cases, the UE may not completely turn off the main radio 504 and configure same to be in a deep sleep state where most of the components of the main radio are turned off and only necessary components including an internal clock and memory are operating.

If data traffic 505 to be transmitted to the UE by the base station is generated and a WUS corresponding to ON is transmitted from the base station to the UE, the main radio enters an ON state 506 and the UE may receive data transmitted by the base station through the main radio rather than the WUR. The power consumption for monitoring a WUS depends on a hardware module of a WUR used for WUS design and signal detection and processing. Therefore, maximized gains obtained by using a WUS and a WUR may be expected, particularly for power-sensitive and small form factor devices, including IoT use cases (such as industrial sensors and controllers) and wearables.

When multiple UEs are supported in a 5G system, a WUS for a particular UE (UE-specific) or a particular UE group among the multiple UEs needs to be transmittable in order to reduce UE power through the WUS. For example, in a case where a WUS for a particular UE is transmitted, the UE may wake up only when a UE-specific WUS is received and thus reduce unnecessary power consumption. In a case where a WUS for a particular UE group is transmitted, UEs having received a UE group WUS may identify whether there is signaling or data to be received after waking up. If at least one UE in the UE group needs to wake up, the base station transmits a UE group WUS and the other UEs in the group that do not need to wake up may unnecessarily consume power. Therefore, the fewer the number of UEs belonging to the same group, the more the UEs may reduce unnecessary power consumption. To this end, a WUS design capable of distinguishing between a large number of UE groups or transmitting UE-specific WUSs is required.

Hereinafter, a WUS design and transmission method by which a particular UE or UE group is distinguished and indication of wake-up is possible in a 5G system is described through specific embodiments.

<First embodiment>

In the first embodiment of the disclosure, methods of designing a WUS capable of indicating only a particular UE (group) among multiple UEs in an OFF or sleep state to wake up when signaling or data for the particular UE or UE group is generated are described.

The base station may designate wake-up information or an ID value for a particular UE or UE group and configure the information or ID for each UE or UE group in order to distinguish between multiple UEs or UE groups and indicate wake-up. Hereinafter, an identifier capable of representing wake-up information of a particular UE or UE group is called a wake-up ID or wake-up group ID. A wake-up ID and pieces of information related to wake-up corresponding to the UE may be configured for the UE by the base station, and then the UE may identify a wake-up ID represented by (or included in or indicated by) a received WUS and then determine whether to perform wake-up.

For example, in a case where there are UE A configured to have a wake-up ID of 1 and UE B configured to have a wake-up ID of 2, when signaling or data required to be received by a particular UE is generated, the base station may transmit a WUS to wake up the UE. Specifically, when data required to be received by UE A is generated, the base station transmits a WUS indicating that a wake-up ID is 1. If UE A and UE B monitor a WUS on the same resource, UE A and UE B both receive the WUS transmitted by the base station. In this case, UE A may determine that the wake-up ID of the received WUS is 1 and operate to wake up a main radio, and UE B may determine that the wake-up ID of the received WUS is not 2 and continuously maintain a main radio to be in a sleep or OFF state without waking up same, thereby reducing unnecessary power consumption. In addition, UE A wakes up through a WUS only when data reception is required and may remain in a sleep or OFF state at other times, and thus power consumption may be reduced, and the time required to receive data may also be reduced.

In the above example, a case where the base station may distinguish which UE is required to wake up among two UEs by transmitting a WUS once has been described. However, a larger number of UEs or UE groups are distinguishable according to a WUS design, and the effect of power consumption reduction of all the UEs achievable by the same WUS resource may become greater.

In order to distinguish multiple wake-up ID candidates through one WUS, a method of designing a WUS such that the WUS is able to precisely transmit as much information as possible is required. However, such a WUS design generally requires a complex receiver structure, which increases the power consumption of the WUR. In order to reduce the overall power consumption of the UE, not only does the main radio needs to be turned off, but the power consumed by the WUR also needs to be lower than that of the main radio. That is, a low-power WUR (LP-WUR), which is configured by a relatively simple structure compared to the main radio and is able to receive a WUS with ultra-low power, may be considered. However, in order to design a WUS through which multiple wake-up ID candidates are correctly detectable in an LP-WUR designed to have a simplified structure, constraints arise. For example, it is necessary to consider a WUS that is receivable even under situations where synchronization is inaccurate, such as when a low-accuracy clock or oscillator is used, in order to implement a receiver operating with low power.

Alternatively, elements required for receiving OFDM signals, which are commonly used in 5G systems, may not be considered in the LP-WUR. Generally, to receive an OFDM signal, a phase-locked loop (PLL) for signal phase synchronization, a CP remover, and a fast Fourier transform (FFT) module are required. If a WUS is designed not to require an OFDM receiver, larger power may be reduced compared to the receiver of a conventional 5G UE. However, designing a WUS that is detectable even by a simplified receiver imposes constraints. That is, in order to satisfy the detection performance and coverage of a WUS when receiving the WUS by using an LP-WUR with low power consumption, there may be constraints on the amount of information (e.g., the number of wake-up ID candidates) that the WUS is capable of including.

Specifically, candidates for WUSs that do not require an OFDM receiver may include signals modulated by on-off keying (OOK), frequency shift keying (FSK), and the like. Alternatively, a method of using a PSS used in 5G systems as a WUS or designing a WUS in the same manner as the PSS may be considered. Although the PSS is based on OFDM, at the time of PSS reception, a receiver may determine whether the PSS has been received by performing cross-correlation between samples received in the time domain and pre-stored coefficients instead of performing OFDM demodulation in a frequency dimension. That is, unlike other channels such as an SSS and PBCH, a power-consuming OFDM receiver is not needed, and a PSS receiver may be implemented using a cross-correlator.

The PSS has been designed for the purpose of achieving time and frequency synchronization with the base station and providing some pieces of information on cell identifiers during a cell search procedure in 5G systems. Accordingly, due to the constraint of being in an unsynchronized state, the number of some pieces of information on cell identifiers, which are transferable by the PSS, is limited to 3. That is, the number of cell ID candidates distinguishable through the PSS designed in the current 5G system is 3. In addition, although a WUS using the aforementioned OOK or FSK modulation schemes is receivable by a receiver with a simplified structure, the amount of information containable in a single WUS, that is, the number of distinguishable wake-up Ids may be limited in order to satisfy detection performance and coverage requirements.

The disclosure describes a method of, when the number of wake-up IDs distinguishable by a single WUS transmission is limited to n, designing a WUS and configuring wake-up IDs such that more than n UEs or UE groups are distinguishable. In the following description, a WUS that contains limited wake-up ID information is referred to as a WUS, and a WUS designed to be used to distinguish more UEs or UE groups is referred to as a multiple-user WUS. These terms are arbitrarily defined and may be replaced with other terms referring to the same concept. The WUS may include WUSs designed in various other schemes, such as a WUS in the above OOK or FSK modulation schemes, and a WUS designed in a PSS scheme. The WUS design method used to design the MU-WUS is not limited.

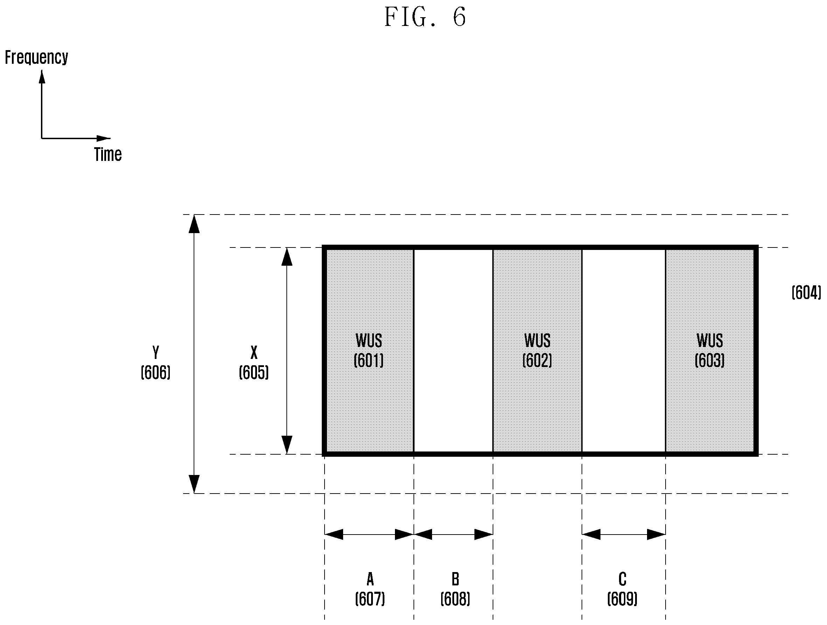

FIG. 6 is a diagram illustrating an example of a method of, when the number of wake-up ID candidates distinguishable by a single WUS is limited, designing an MU-WUS such that multiple UEs or UE groups are distinguishable through a WUS. Referring to FIG. 6, a WUS 601, 602, or 603 capable of including limited wake-up (group) IDs may be transmitted multiple times to configure an MU-WUS 604 enabling more wake-up (group) IDs to be distinguished. In FIG. 6, an example in which three WUSs 601, 602, and 603 configures an MU-WUS has been illustrated, but the number of WUSs configuring an MU-WUS may be various and is not limited.

When the number of wake-up (group) IDs distinguishable by a WUS is n, and the number of WUSs configuring an MU-WUS is m, the number of wake-up (group) IDs distinguishable through the MU-WUS is a total of $n^M$. For example, if each of the WUSs 601, 602, and 603 is able to distinguish three IDs, the number of wake-up (group) IDs distinguishable through the MU-WUS 604 is a total of 27. However, it is assumed that the number (M) of WUSs configuring an MU-WUS and the number (n) of IDs distinguishable by a single WUS are configured by the base station or specified in a specification and are known to the UE. As described below, WUSs configuring an MU-WUS may be transmitted by using, as respective intervals, offsets configured by the base station or predetermined on a specification, or it may be understood that WUSs transmitted within a specific time interval configures an MU-WUS.

As shown in FIG. 6, when multiple WUSs configures an MU-WUS, a method for representing a specific wake-up ID also needs to be determined. As one method, a wake-up ID represented in decimal may be converted into an n-ary number, and which value needs to be included in each WUS may be determined. As illustrated in FIG. 6, it is assumed that when an MU-WUS configured by three WUSs is designed and the value of n is 3, the base station transmits an MU-WUS to wake up a UE having a wake-up ID of 21. The number 21 may be expressed as $2 \times 3^2 + 1 \times 3^1 + 0 \times 3^0$, that is, may be expressed as 210 when converted into a ternary number. When the base station transmits an MU-WUS to indicate the wake-up ID of 21, the base station may transmit a WUS with an ID of 2 as the firstly transmitted WUS 601, a WUS with an ID of 1 as the second WUS 602, and a WUS with an ID of 0 as the third WUS 603. The UE may combine the IDs of the transmitted WUSs to identify the currently transmitted wake-up ID value and compare same with a configured wake-up ID value to determine whether to wake up the main radio. Alternatively, the UE may wake up the main radio after determining only whether an MU-WUS corresponding to a wake-up ID configured for the UE has been transmitted, without directly calculating the wake-up ID value of the currently transmitted MU-WUS.

If a method of determining a full wake-up ID from a combination of the IDs of WUSs configuring an MU-WUS is specified in a specification as a conversion from an n-ary number to a decimal number as described above, when a wake-up ID configured for the UE is 21, the UE may recognize the fact that the IDs of WUSs that the UE needs to receive are 2, 1, and 0, respectively. Therefore, the UE may determine only whether the ID of the first WUS 601 corresponds to 2, whether the ID of the second WUS 602 corresponds to 1, and whether the ID of the third WUS 603 corresponds to 0, to determine whether an MU-WUS corresponding to the wake-up ID configured for the UE has been transmitted. If a case where the ID targeted in each WUS has been transmitted is represented as 1 and a case where the ID has not been transmitted is represented as 0, a processor of an LP-WUR may determine that an MU-WUS corresponding to the configured wake-up ID has been transmitted only when values corresponding to 1, 1, and 1 are derived from the parts determining the respective IDs of the WUSs 601 to 603, and perform an operation of waking up the main radio. If values such as 1, 0, and 1 are derived, at least one of which is different from the values corresponding to the configured wake-up ID, the processor of the LP-WUR may determine that the wake-up ID is a wake-up ID for another UE or another UE group and may not wake up the main radio.

The size of the resources used by the WUSs configuring an MU-WUS needs to be specified in a specification, configured for the UE by the base station, or obtainable from therefrom through information. The elements of a resource required for defining an MU-WUS need to include, at a minimum, the items specified below.

- Size X 605 of a frequency resource of a WUS: This refers to the size of a frequency resource used to transmit a single WUS and may vary according to a WUS design.
- Size Y 606 of a frequency resource of an MU-WUS: This refers to the size of a frequency resource used for an MU-WUS, considering all guard resources for reducing interference between a WUS and other signals transmitted at adjacent frequencies. The value of Y may vary depending on the value of X and the guard resources. In addition, in a case of an MU-WUS configured by transmitting multiple WUSs on the frequency resource axis rather than an MU-WUS configured by transmitting a WUS multiple times on the time axis as illustrated in FIG. 6, the value of Y may also be affected by the number (M) of the WUSs configuring the MU-WUS.
- Size A 607 of a time resource of a WUS: This refers to a time required to transmit a single WUS and may vary according to a WUS design.
- Offset B 608 and offset C 609 between WUS transmissions: This refers to an offset between WUS transmissions applied when transmitting multiple WUSs, and a corresponding offset may be configured by the base station or predetermined in a specification, or an offset value may include certain information. In a case where an offset value are configured by the base station or predetermined, the values of B 608 and C 609 are configured for or obtained by the LP-WUR so that the LP-WUR may receive the WUS 601 and then prepare to receive the WUS 602 after passage of offset B 608, and receive the WUS 602 and then prepare to receive the WUS 603 after passage of offset C 609. Alternatively, if all offset values are configured to be 0, this may imply that multiple WUSs are received consecutively.
- When an offset value includes certain information, the UE may obtain additional information by comparing the offsets sizes of the received WUSs or use the information as a wake-up ID. For example, in the above example, when determining a wake-up ID, the UE may use not only the ID included in each WUS but also information obtained from the offsets. In the above example, if it is assumed that the UE compares offset information to, when the size (or length) of offset B 608 is smaller than that of offset C 609, add 27 to a wake-up ID obtained by combining the WUSs, and when the size of offset B 608 is not smaller than that of offset C 609, add 0 thereto, the number of wake-up IDs distinguishable through the MU-WUS in FIG. 6 becomes 54. As described above, the UE may distinguish a larger number of wake-up IDs through comparison between the offset sizes of WUSs.

<Second embodiment>

In the second embodiment of the disclosure, a method of transmitting a WUS capable of indicating only a particular UE (group) among multiple UEs to wake up when signaling or data for the particular UE or UE group is generated are described. More specifically, a method in which the MU-WUS designed in the first embodiment is mapped to various resource configurations and wake-up of only a particular UE (group) is indicatable according to the resource configurations is proposed.

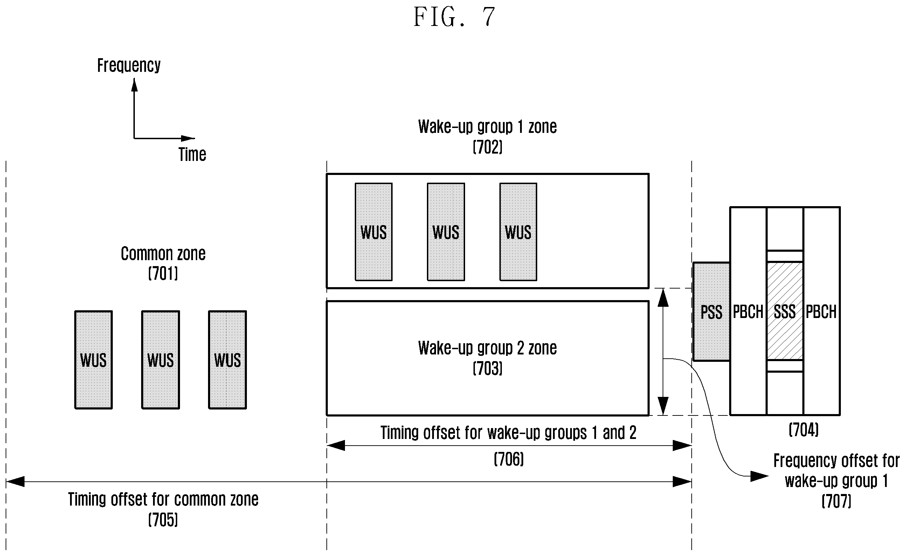

FIG. 7 is a diagram illustrating an example of a method in which a UE determines whether to wake up a main radio by monitoring different MU-WUSs. In the first embodiment, an MU-WUS configured by one or multiple WUSs may be allocated and transmitted on a particular time and frequency resource. If the size of a resource on which the base station transmits the MU-WUS is limited to Y 606 in FIG. 6 under the situation where the UE does not know which time resource among time resources the MU-WUS is to be transmitted, the number of distinguishable wake-up (group) IDs is same as the number of wake-up (group) IDs distinguishable by a single MU-WUS, that is, $n^M$ in an example of the first embodiment. However, if more resources are securable for the base station to transmit the MU-WUS, the number of distinguishable wake-up (group) IDs may be further increased.

A first method of transmitting MU-WUSs through different resources is to distinguish different MU-WUSs on frequency resources and transmit same. When MU-WUSs for different UEs (groups) are transmitted through different frequency resources, a method of determining a frequency resource on which an each UE (group) needs to monitor an MU-WUS may be broadly classified into two methods as follows. The frequency resources on which different MU-WUSs are transmitted are required to be separated.

[Method 1-1] Method of configuring frequency resource of MU-WUS corresponding to each UE (group)

According to Method 1-1, the base station may configure, for the UE, a frequency offset corresponding to the UE (group) from a particular channel, such as an SSB, or an initial downlink bandwidth part (initial DL BWP) to directly notify of which frequency resource on which the UE (group) needs to monitor an MU-WUS.

For example, the frequency offset may be defined as the distance (or the number of PRBs), in the frequency domain, from the PRB having the lowest number in an initial DL BWP obtained when the main radio performs a cell search, to the PRB having the lowest number included in the MU-WUS. In the disclosure, the definition of the frequency offset is not limited to the above example and may vary.

A frequency offset may be configured for the UE by the base station. For example, a corresponding value may be configured for UEs in an idle state or deactivated state through system information, and the frequency offset value may be configured for UEs in a connected state through RRC signaling.

[Method 1-2] Method of obtaining frequency resource on which MU-WUS is to be transmitted, by using wake-up ID allocated to each UE (group) and separate information

Method 1-2 is a method of indirectly notifying of which frequency resource on which a UE (group) needs to monitor an MU-WUS according to a wake-up ID value configured for the UE (group).

For example, a situation where the base station is able to simultaneously transmit an MU-WUS capable of distinguishing 27 wake-up IDs on different frequency resources and thus support 81 distinguishable wake-up IDs is assumed. That is, the base station may divide a particular frequency band (e.g., initial DL BWP) into three parts and simultaneously transmit three MU-WUSs. The UE may determine which frequency band the UE is to monitor according to a wake-up ID value configured for the UE. For example, the UE may monitor a low frequency band if the UE is allocated wake-up IDs of 0 to 26, monitor a middle frequency band if the UE is allocated wake-up IDs of 27 to 53, and monitor a high frequency band if the UE is allocated wake-up IDs of 54 to 80.

A particular frequency band in which an MU-WUS is transmittable, the number of possible divided bands, and a frequency band division method may be configured by the base station through system information or RRC signaling or specified in a specification. If UEs in an idle state, a deactivated state, and a connected state all determines a frequency resource on which an MU-WUS is transmittable, based on the same information, the system information of the base station may be used for configuration. If a method of determining a frequency resource on which an MU-WUS is transmittable varies according to the RRC state of the UE, the UE in a connected state may receive a separate configuration for MU-WUS transmission through RRC signaling.

The second method of transmitting MU-WUSs through different resources is to distinguish different MU-WUSs on time resources and transmit same. Since the LP-WUR consumes low power, the LP-WUR may always remain in an ON state and monitor whether an MU-WUS is transmitted. However, to maximally reduce the power consumption of the LP-WUR, the LP-WUR may also be configured to perform an operation of repeating to be turned on and off periodically in a manner similar to a DRX mode of the main radio. In the following description, the LP-WUR repeating ON and OFF modes according to a predetermined time period is referred to as a DRX operation of the LP-WUR.

In a case where the LP-WUR performs the DRX operation, even when the same frequency resource is used, multiple MU-WUSs may be distinguished according to the times at which the MU-WUSs are transmitted. Similarly to the example of the method of distinguishing between different MU-WUSs on frequency resources as described above, a method for determining a time resource on which each UE (group) needs to monitor an MU-WUS is also required to be considered. The method for determining a time resource on which an MU-WUS needs to be monitored may be broadly classified into two methods as follows.

[Method 2-1] Method of configuring time resource of MU-WUS corresponding to each UE (group)

Method 2-1 is a method of configuring a timing offset corresponding to a UE (group) from a particular channel, such as an SSB, to directly notify of which time resource on which the UE (group) needs to monitor an MU-WUS.

For example, the timing offset may be defined as a value of a time interval from the start part of a slot transmitting an SSB obtained when the main radio performs a cell search, to a moment at which the LP-WUS enters an ON state and needs to start to monitor an MU-WUS. In the disclosure, the definition of the timing offset is not limited to the above example and may vary. Information such as a monitoring duration time and period may be additionally configured or determined in advance. The timing offset may be a positive number or negative number. For example, the time interval may be positioned before a slot in which an SSB is transmitted.

Alternatively, it is also possible that a time interval for which the UE needs to monitor an MU-WUS is configured based on time synchronization obtained by the UE, or a time interval for which the UE needs to monitor an MU-WUS is configured based on an absolute time. In this case, it is also possible that a period, an offset, and the length of a monitoring interval for configuring a time interval for which an MU-WUS needs to be monitored are configured similar to DRX, or a particular time interval on the time domain based on an absolute time or time synchronization is configured as a time interval for which an MU-WUS needs to be monitored.

[Method 2-2] Method of identifying time resource on which MU-WUS is to be transmitted, by using wake-up ID allocated to each UE (group) and separate information

Method 2-2 is a method of indirectly notifying of which time resource on which an MU-WUS needs to be monitored according to a wake-up ID value configured for a UE (group).

For example, a situation where the base station is able to configure respective time zones (or time intervals) in which three different MU-WUSs are transmittable on the same frequency resource, transmit an MU-WUS capable of distinguishing 27 wake-up IDs, and thus distinguish and transmit 81 wake-up IDs is assumed. The UE may determine which time zone in which the UE is to monitor an MU-WUS according to a configured wake-up ID value. It is possible each of the respective time zones to be configured based on time synchronization obtained by the UR or configured based on an absolute time.

Information for the UE to monitor an MU-WUS, such as the number of time zones in which an MU-WUS is transmittable, and a period and an ON state duration time of a DRX mode of the LP-WUR applicable to each time zone may be configured by the base station or specified in a specification. In addition, a mapping relationship between each time zone and a wake-up ID may also be configured or specified in a specification.

If an MU-WUS indicates a wake-up group ID, UEs corresponding to the same group need to monitor the MU-WUS transmitted on the same time and frequency resource. In addition, no identical wake-up (group) ID is required to be configured for different UEs (groups) monitoring an MU-WUS transmitted on the same time and frequency resources.

A method of transmitting different MU-WUSs on different frequency and time resources, respectively may support only one of a method of distinguishing and transmitting MU-WUSs on frequency resources or a method of distinguishing and transmitting MU-WUSs on time resources according to a configuration of the base station or a DRX mode support capability of the LP-WUR, or may also support a method of distinguishing and transmitting MU-WUSs on both time resources and frequency resources. In addition, only when different MU-WUSs are transmittable through distinguished resources as described above, a method in which the UE monitors multiple MU-WUSs to enable the base station to support a larger number of wake-up (group) IDs may also be considered.

FIG. 7 is a diagram illustrating an example of a method in which a UE determines whether to wake up a main radio by monitoring different MU-WUSs. Referring to FIG. 7, a common zone 701 and wake-up group zones 702 and 703 are distinguished. A timing offset 705 for the common zone is applied to the common zone 701, and a timing offset 706 for wake-up groups 1 and 2 is applied to the wake-up group 1 zone 702 and the wake-up group 2 zone 703, so that a resource of each zone may be determined. In addition, for example, the wake-up group 1 zone 702 and the wake-up group 2 zone 703 may be determined by applying a frequency offset based on an SSB 704, and for example, a frequency offset 707 for wake-up group 1 may be applied to the wake-up group 1 zone 702. Each UE may receive a first MU-WUS in the zone 701 and determine whether to receive a second MU-WUS in the zone 702 or 703. That is, the UE may identify a wake-up ID over two stages.

For example, if a wake-up group ID and a wake-up ID in a group are configured for a UE, the UE may determine whether to receive an MU-WUS in the wake-up group zone 702 or 703, based on a wake-up group ID of an MU-WUS received in the common zone 701 first. If the wake-up group ID configured for the UE is 1 and the ID of the MU-WUS received in the common zone 701 is 1, the UE may consider that the received MU-WUS is a signal for waking up a particular UE in a group for which the same wake-up group ID is configured, and receive a second MU-WUS in the wake-up group 1 zone 702 corresponding to the wake-up group ID of the UE. If a wake-up ID of the secondly received MU-WUS is the same as the configured wake-up ID, the UE wakes up the main radio and, if a different ID is received, maintains a sleep state continuously.

UEs (groups) (e.g., the wake-up group ID is 0) for which different wake-up group IDs are configured do not need to receive the second MU-WUS if the ID of the MU-WUS received in the common zone 701 is 1, and the base station do not also need to transmit an MU-WUS on the resource 703 assigned to a non-corresponding wake-up group. That is, the resource of the wake-up group 2 zone 703 in which no second MU-WUS is required to be transmitted and received may be used by the base station for transmission of a signal other than a WUS.

Therefore, when it is assumed that one MU-WUS is capable of distinguishing 27 IDs, the base station and the UE may distinguishably support a maximum of $27^2$ wake-up IDs of the UE through two MU-WUS transmissions.

The specific terms used in the above example may be changed. According to at least an embodiment of the disclosure, a UE may receive MU-WUSs over multiple stages on different resources, and the LP-WUR of the UE may determine whether to wake up the main radio. Therefore, there is the technical effect of a large number of UEs being distinguishable through a relatively small number of MU-WUS transmissions. At least one method of the first embodiment and/or the second embodiment of the disclosure may be combined and used.

<Third embodiment>

The third embodiment provides an example of an operation performed by a UE and a base station when a UE (group) is distinguished and a wake-up is indicated, based on a wake-up (group) ID. A WUS or MU-WUS transmitted at this time includes the examples in the first embodiment and the second embodiment, but is not limited thereto.

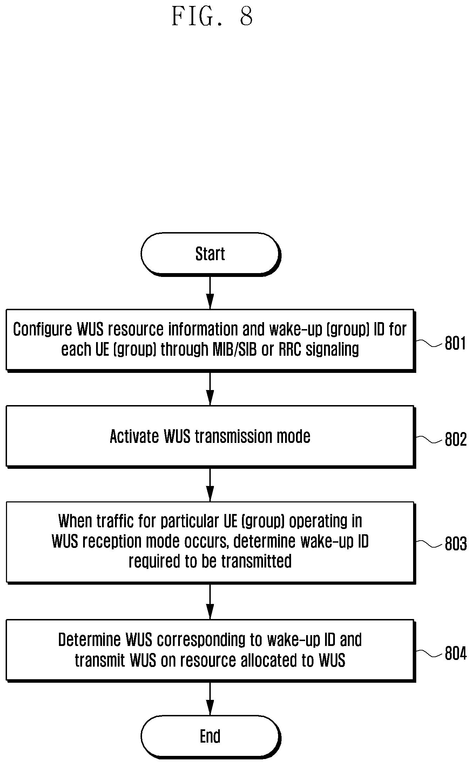

FIG. 8 is a diagram illustrating an example of an operation of a base station when a UE (group) is distinguished and a wake-up is indicated, based on a wake-up (group) ID.

A base station may provide, to UEs through an MIB or SIB, information relating to whether a WUS is supported (or transmitted), such as whether the base station is in a state of transmitting a WUS or is capable of transmitting a WUS (operation 801). In addition, if the base station is a base station that transmits a WUS, the base station also needs to provide information relating to which resource on which a WUS is to be transmitted. The base station configures, for the UE, corresponding wake-up ID or wake-up group ID information and a time and/or frequency resource on which a WUS is transmitted, in an initial access process or through signaling a subsequent connected state.

Even if the base station is a base station capable of transmitting a WUS, a WUS transmission mode may be turned off. If the WUS transmission mode of the base station is OFF, the same operation as an operation of a base station not supporting a WUS is performed except for that WUS-related information is configured for the UE. If the base station is to operate in the WUS transmission mode, the base station activates the WUS transmission mode and signals information indicating that the base station operates in the WUS transmission mode to the UE (operation 802). Information on activation of the WUS transmission mode may be information for a particular UE or UE group or information for a particular wake-up (group) ID. The information on activation of the WUS transmission mode may include configuration information on WUS transmission described above. The configuration information may be information for updating pre-configured WUS configuration information.

When data traffic for a particular UE (group) operating in a WUS reception mode occurs and thus the base station needs to wake up the UE (group), the base station determines a wake-up (group) ID of the UE (group) required to be woken up (operation 803). In this case, when respective items of traffic for multiple UEs occur, the base station determines a wake-up ID required to be firstly transmitted by considering a traffic generation order or priority.

When a wake-up ID of an (MU-)WUS required to be transmitted is determined, the base station determines which frequency and time resource on which the (MU-)WUS is required to be transmitted, and then transmit the (MU-)WUS (operation 804). When the base station determines an (MU-)WUS required to be transmitted on a particular time and frequency resource, for example, when the base station determines an (MU-)WUS transmitted in the wake-up group 1 zone 701 in FIG. 7, the base station may transmit a single (MU-)WUS or multiple (MU-)WUSs per DRX cycle of the LP-WUR. For example, when items of traffic are generated for multiple UEs (groups) among UEs (groups) monitoring an (MU-)WUS on a particular time and frequency resource, the base station may transmit an (MU-)WUS for a UE (group) for which an item of traffic is generated later in a next DRX cycle of the LP-WUR, or may sequentially transmit an (MU-)WUS for each UE (group) for an on duration time in a single DRX cycle of the LP-WUR.

The disclosure is not limited by the contents described with reference to FIG. 8. The contents of FIG. 8 may be combined with the first embodiment and/or the second embodiment, and it is possible to perform the disclosure even when each operation in FIG. 8 is omitted, has additional operations inserted, or has the order of operations changed.

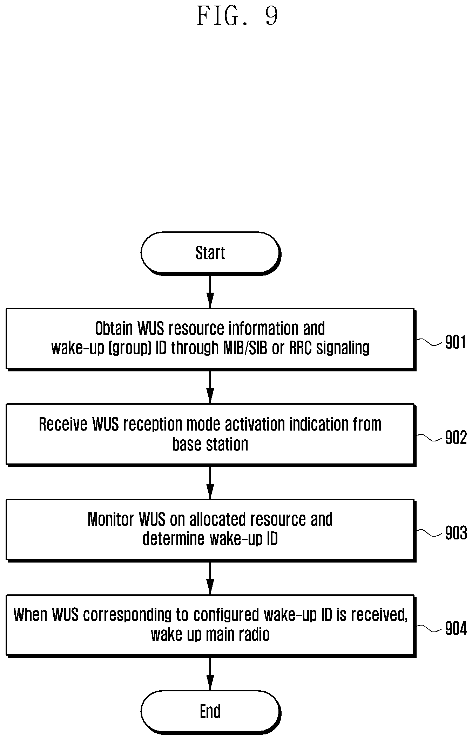

FIG. 9 is a diagram illustrating an example of an operation of a UE when the UE (group) is distinguished and a wake-up is indicated, based on a wake-up (group) ID.

Each UE may obtain whether the base station supports (or transmits) a WUS, a wake-up (group) ID, and WUS time and/or frequency resource information through at least one of an initial access process, signaling, or information pre-determined in a specification (operation 901). In particular, a UE in a connected state may obtain WUS-related information through an MIB and/or SIB and information specified in a specification, and a UE in a deactivated state may use MIB and/or SIB information and WUS-related information configured in a connected state.

When the base station indicates the UEs to activate a WUS reception mode, the UEs turn off the main radios and start to monitor a WUS transmitted from the base station through the LP-WURs (operation 902). A resource on which a WUS is monitored and a reception method are based on the information obtained in operation 901, and if there is no separate indication from the base station, it is considered that there has been no change in previously configured WUS information. Information on activation of the WUS reception mode may be information for a particular UE or UE group or information for a particular wake-up (group) ID. The information on activation of the WUS reception modee may include configuration information on WUS transmission described above. The configuration information may be information for updating pre-configured WUS configuration information.

When the WUS reception mode is activated in operation 902, and information for WUS reception is determined, the UE monitors an (MU-)WUS (operation 903). The UE monitors an (MU-)WUS and determines a wake-up ID on a configured frequency and time resource. Even if an (MU-)WUS corresponding to the configured wake-up ID is received on a non-configured resource, the UE considers that the (MU-)WUS is an (MU-)WUS for another UE (group) and does not wake up the main radio.

When traffic is generated and thus the base station transmits an (MU-)WUS for a particular UE (group), the UE (group) receives an (MU-)WUS corresponding to a configured wake-up ID on a configured resource and, accordingly, wakes up the main radio (operation 904).

The disclosure is not limited by the contents described with reference to FIG. 9. The contents of FIG. 9 may be combined with the first embodiment and/or the second embodiment, and it is possible to perform the disclosure even when each operation in FIG. 9 is omitted, has additional operations inserted, or has the order of operations changed.

FIG. 14 is a block diagram illustrating a structure of a UE according to an embodiment of the disclosure.

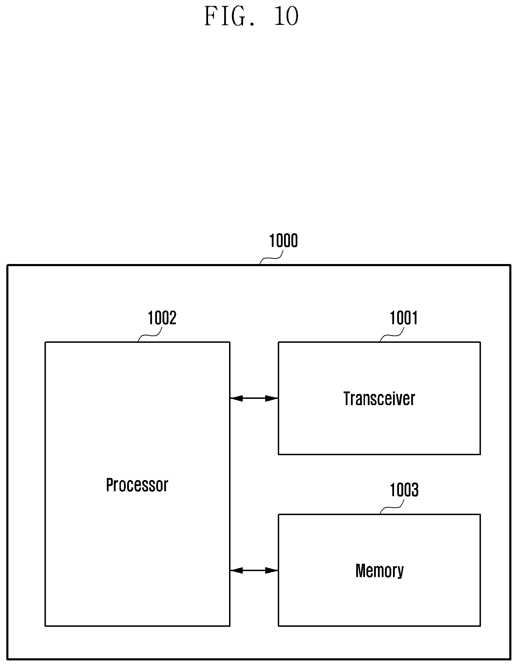

Referring to FIG. 10, the UE 1000 may include a transceiver 1001, a controller (for example, processor) 1002, and a storage (for example, memory) 1003. The transceiver 1001, the controller 1002, and the storage 1003 of the UE 1000 may operate according to at least one or a combination of methods corresponding to the above-described embodiments. However, components of the UE 1000 are not limited to the illustrated example. According to another embodiment, the UE 1000 may include a larger or smaller number of components than the above-described components. Furthermore, in a specific case, the transceiver 1001, the controller 1002, and the storage 1003 may be implemented in the form of a single chip.

According to an embodiment, the transceiver 1001 may include a transmitter and a receiver. The transceiver 1001 may transmit/receive signals with the base station. The signals may include control information and data. The transceiver 1001 may include an RF transmitter configured to up-convert and amplify the frequency of transmitted signals, and an RF receiver configured to low-noise-amplify received signals and down-convert the frequency thereof. The transceiver 1001 may receive signals through a radio channel, output the same to the controller 1002, and transmit signals output from the controller 1002 through the radio channel.

The controller 1002 may control a series of processes such that the UE 1000 can operate according to the above-described embodiments of the disclosure. For example, the controller 1002 may perform or control the UE's operations for performing at least one or a combination of the methods according to embodiments of the disclosure. The controller 1002 may include at least one processor. For example, the controller 1002 may include a communication processor (CP) which performs control for communication and an application processor (AP) which controls upper layers (for example, applications).

The storage 1003 may store control information (for example, configuration information of a (MU-)WUS configured for the UE 1000) or data, and may have a region for storing data necessary for control of the controller 1002 and data produced during control by the controller 1002.

Although not illustrated, the UE 1000 may further include a WUR. The WUR may be included in the transceiver 1001 or may exist as a separate receiver.

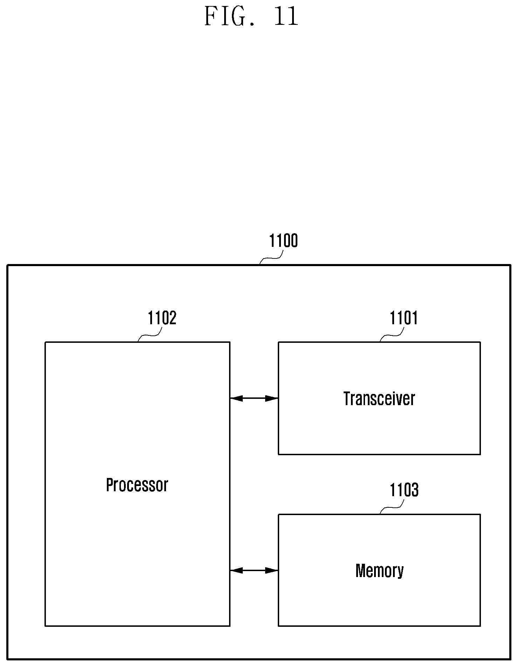

FIG. 11 is a block diagram illustrating the structure of a base station according to an embodiment of the disclosure.

Referring to FIG. 11, the base station 1100 may include a transceiver 1101, a controller (for example, processor) 1102, and a storage 1103. The transceiver 1101, the controller 1102, and the storage 1103 of the base station 1100 may operate according to at least one or a combination of methods corresponding to the above-described embodiments. However, components of the base station 1100 are not limited to the above-described example. According to another embodiment, the base station 1100 may include a larger or smaller number of components than the above-described components. Furthermore, in a specific case, the transceiver 1101, the controller 1102, and the storage 1103 may be implemented in the form of a single chip.

According to an embodiment, the transceiver 1101 may include a transmitter and a receiver. The transceiver 1101 may transmit/receive signals with the UE. The signals may include control information and data. The transceiver 1101 may include an RF transmitter configured to up-convert and amplify the frequency of transmitted signals, and an RF receiver configured to low-noise-amplify received signals and down-convert the frequency thereof. The transceiver 1101 may receive signals through a radio channel, output the same to the controller 1102, and transmit signals output from the controller 1102 through the radio channel.

The controller 1102 may control a series of processes such that the base station can operate according to the above-described embodiments of the disclosure. For example, the controller 1102 may perform or control the base station's operations for performing at least one or a combination of the methods according to embodiments of the disclosure. The controller 1102 may include at least one processor. For example, the controller 1102 may include a communication processor (CP) which performs control for communication and an application processor (AP) which controls upper layers (for example, applications).

The storage 1103 may store control information (for example, configuration information of a (MU-_WUS), data, and control information or data received from the UE, and may have a region for storing data necessary for control of the controller 1102 and data produced during control by the controller 1102.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A method performed by a terminal in a wireless communication system, the method comprising:

   identifying configuration information on a wake-up signal (WUS);
   detecting the WUS through a wake-up receiver (WUR), based on the configuration information;
   triggering a main radio to be turned on in response to detection of the WUS; and
   receiving a signal from a base station through the main radio,
   wherein the WUS is configured by one or more signals, and the one or more signals are transmitted on different frequency-time resources, respectively.

2. The method of claim 1, wherein an offset in a time domain exists between the one or more signals, and wherein the offset indicates at least a part of an identifier of the WUS or information related to wake-up.

3. The method of claim 1, wherein the different frequency-time resources of the one or more signals indicate at least a part of an identifier of the WUS or a wake-up group identifier of the terminal.

4. The method of claim 1, wherein the different frequency-time resources are identified based on at least one of a frequency offset based on an initial downlink bandwidth part or a synchronization signal block (SSB) or a timing offset based on the SSB or an absolute time.

5. A method performed by a base station in a wireless communication system, the method comprising:

   identifying configuration information on a wake-up signal (WUS);
   transmitting the WUS according to the configuration information to a terminal; and
   transmitting a signal to the terminal,
   wherein the WUS is configured by one or more signals, and the one or more signals are transmitted on different frequency-time resources, respectively.

6. The method of claim 5, wherein an offset in a time domain exists between the one or more signals, and

wherein the offset indicates at least a part of an identifier of the WUS or information related to wake-up.

7. The method of claim 5, wherein the different frequency-time resources of the one or more signals indicate at least a part of an identifier of the WUS or a wake-up group identifier of the terminal.

8. The method of claim 5, wherein the different frequency-time resources are identified based on at least one of a frequency offset based on an initial downlink bandwidth part or a synchronization signal block (SSB) or a timing offset based on the SSB or an absolute time.

9. A terminal in a wireless communication system, the terminal comprising:

   a main radio comprising a transceiver;
   a wake-up receiver (WUR) configured to detect a wake-up signal (WUS); and
   a controller configured to control the main radio and a WUS,
   wherein the controller is configured to configure the WUR and the main radio to:

   identify configuration information on a wake-up signal (WUS);
   allow the WUR to detect the WUS, based on the configuration information;
   trigger the main radio to be turned on in response to detection of the WUS; and
   receive a signal from a base station through the main radio, and
   wherein the WUS is configured by one or more signals, and the one or more signals are transmitted on different frequency-time resources, respectively.

10. The terminal of claim 9, wherein an offset in a time domain exists between the one or more signals, and wherein the offset indicates at least a part of an identifier of the WUS or information related to wake-up.

11. The terminal of claim 9, wherein the different frequency-time resources of the one or more signals indicate at least a part of an identifier of the WUS or a wake-up group identifier of the terminal.

12. The terminal of claim 9, wherein the different frequency-time resources are identified based on at least one of a frequency offset based on an initial downlink bandwidth part or a synchronization signal block (SSB) or a timing offset based on the SSB or an absolute time.

13. A base station of a wireless communication system, the base station comprising:

   a transceiver; and
   a controller,
   wherein the controller is configured to:

   identify configuration information on a wake-up signal (WUS);
   transmit the WUS according to the configuration information to a terminal; and
   transmit a signal to the terminal, and
   wherein the WUS is configured by one or more signals, and the one or more signals are transmitted on different frequency-time resources, respectively.

14. The method of claim 13, wherein an offset in a time domain exists between the one or more signals, and wherein the offset indicates at least a part of an identifier of the WUS or information related to wake-up.

15. The base station of claim 13, wherein the different frequency-time resources of the one or more signals indicate at least a part of an identifier of the WUS or a wake-up group identifier of the terminal, or wherein the different frequency-time resources are identified based on at least one of a frequency offset based on an initial downlink bandwidth part or a synchronization signal block (SSB) or a timing offset based on the SSB or an absolute time.

# FIG. 1

Frame (114)

Subframe (105)

Slot (106)

Transmission bandwidth $N_{BW}$ subcarriers (104)

$N_{SC}^{RB}$ subcarriers (110)

Resource element (112)

Resource block (108)

Frequency

time

$N_{symb}^{slot}$ symbols (102)

# FIG. 2

SS/PBCH periodicity = P

Half frame = 0.5 ms

SS/PBCH block

| #0 | #1 | #2 | #3 | #4 | ...... | #L-1 |

time

t1
[201]

t2
[202]

[205]
UE1

[203]

#d0

#d1

#d2

Beam
sweeping

#d3

gNB

UE2
[206]

#d4

[204]

# FIG. 3

UE          gNB

① Random Access Preamble
Message 1
(310)

② Random Access Response
Message 2
(320)

③ Scheduled Transmission
Message 3
(330)

④ Contention Resolution
Message 4
(340)

FIG. 4

FIG. 5

FIG. 6

EP 4 622 354 A1

# FIG. 7

Frequency

Time

Wake-up group 1 zone
(702)

Common zone
(701)

WUS  WUS  WUS

WUS  WUS  WUS

Wake-up group 2 zone
(703)

PSS | PBCH | SSS | PBCH

(704)

Timing offset for wake-up groups 1 and 2
(706)

Timing offset for common zone
(705)

Frequency offset for
wake-up group 1
(707)

EP 4 622 354 A1

# FIG. 8

```
                    ┌─────────────┐
                    │    Start    │
                    └──────┬──────┘
                           │
                           ▼
┌─────────────────────────────────────────────┐
│ Configure WUS resource information and       │      ～801
│ wake-up (group) ID for each UE (group)       │
│ through MIB/SIB or RRC signaling             │
└────────────────────┬────────────────────────┘
                     │
                     ▼
┌─────────────────────────────────────────────┐
│         Activate WUS transmission mode       │      ～802
└────────────────────┬────────────────────────┘
                     │
                     ▼
┌─────────────────────────────────────────────┐
│ When traffic for particular UE (group)       │      ～803
│ operating in WUS reception mode occurs,      │
│ determine wake-up ID required to be          │
│ transmitted                                  │
└────────────────────┬────────────────────────┘
                     │
                     ▼
┌─────────────────────────────────────────────┐
│ Determine WUS corresponding to wake-up ID    │      ～804
│ and transmit WUS on resource allocated to    │
│ WUS                                          │
└────────────────────┬────────────────────────┘
                     │
                     ▼
             ┌─────────────┐
             │     End     │
             └─────────────┘
```

# FIG. 9

```
        ┌──────────────┐
        │    Start      │
        └──────┬───────┘
               │
               ▼
┌────────────────────────────────────────┐
│   Obtain WUS resource information and     │── 901
│ wake-up (group) ID through MIB/SIB or RRC signaling │
└────────────────────┬───────────────────┘
                     │
                     ▼
┌────────────────────────────────────────┐
│ Receive WUS reception mode activation indication from │── 902
│              base station               │
└────────────────────┬───────────────────┘
                     │
                     ▼
┌────────────────────────────────────────┐
│      Monitor WUS on allocated resource and       │── 903
│           determine wake-up ID          │
└────────────────────┬───────────────────┘
                     │
                     ▼
┌────────────────────────────────────────┐
│ When WUS corresponding to configured wake-up ID is received, │── 904
│              wake up main radio         │
└────────────────────┬───────────────────┘
                     │
                     ▼
        ┌──────────────┐
        │     End       │
        └──────────────┘
```

FIG. 10

1000

1002

Processor

1001

Transceiver

1003

Memory

# FIG. 11

1100

1102

Processor

1101

Transceiver

1103

Memory

## INTERNATIONAL SEARCH REPORT

| | International application No. |
|---|---|
| | **PCT/KR2023/021697** |

| A. | CLASSIFICATION OF SUBJECT MATTER |
|---|---|

**H04W 52/02**(2009.01)i; **H04W 76/27**(2018.01)i

According to International Patent Classification (IPC) or to both national classification and IPC

| B. | FIELDS SEARCHED |
|---|---|

Minimum documentation searched (classification system followed by classification symbols)

H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: WUS, WUR, 메인 라디오(main radio), 오프셋(offset), 그룹 식별자(group ID)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | INTEL CORPORATION. Discussions on L1 signal design and procedure for low power WUS. R1-2211422, 3GPP TSG RAN WG1 #111. Toulouse, France. 07 November 2022.<br>See pages 1-8 and figures 2 and 4. | 1-2,4-6,8-10,12-14<br>3,7,11,15 |
| Y | CATT. UE Power saving schemes and power saving signal/channel. R1-1902025, 3GPP TSG RAN WG1 Meeting #96. Athens, Greece. 16 February 2019.<br>See pages 16 and 20. | 3,7,11,15 |
| A | MODERATOR (VIVO). Final FL summary of evaluation on low power WUS. R1-2213005, 3GPP TSG RAN WG1#110bis-E. 25 November 2022.<br>See pages 22, 51 and 65. | 1-15 |
| A | NOKIA et al. Low power WUS Evaluation Methodology. R1-2211269, 3GPP TSG RAN WG1 #111. Toulouse, France. 07 November 2022.<br>See pages 1-21. | 1-15 |
| A | SAMSUNG. Evaluation on LP-WUS/WUR. R1-2212070, 3GPP TSG RAN WG1 #111. Toulouse, France. 07 November 2022.<br>See pages 1-11. | 1-15 |

☐ Further documents are listed in the continuation of Box C.    ☐ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 March 2024** | **25 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)